(19) Europäisches Patentamt
European Patent Office
Office européen des brevets

(11) **EP 2 582 153 A1**

(12) **EUROPEAN PATENT APPLICATION**

(43) Date of publication:
**17.04.2013 Bulletin 2013/16**

(51) Int Cl.:
*H04R 9/02* (2006.01)     *H04M 1/725* (2006.01)

(21) Application number: **11184884.2**

(22) Date of filing: **12.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Research In Motion Limited**
**Waterloo, ON N2L 3W8 (CA)**

(72) Inventors:
• **Allen, Luke Stephen**
  **Waterloo, Ontario N2L 3W8 (CA)**
• **Edgar, Robbie Donald**
  **Waterloo, Ontario N2L 3W8 (CA)**
• **Shirzadi, Farhoud**
  **Waterloo, Ontario N2L 3W8 (CA)**

(74) Representative: **Moore, Barry et al**
**Hanna Moore & Curley**
**13 Lower Lad Lane**
**Dublin 2 (IE)**

(54) **Portable Electronic Device with Magnetic Audio Interface and Audio Reproduction Accessory Therefor**

(57)     A portable electronic device (100,300) includes an audio coder-decoder 'CODEC' (116) capable of generating analog audio signals (128) from digital audio representations (126), and includes a transmit coil (134) capable of producing an alternating magnetic field (150) upon passage of the analog audio signals through the transmit coil. Automatically determining the presence of conditions for magnetic coupling between the portable electronic device and an audio reproduction accessory (200,400) results in the portable electronic device causing the analog audio signals to be routed from the CODEC to the transmit coil. When an audio reproduction accessory for a portable electronic device is magnetically coupled to the portable electronic device, the sole source of energy for audible sound generated by the audio reproduction accessory may be energy contained in a magnetic field that acts on the audio reproduction accessory, the magnetic field produced by a transmit coil of the portable electronic device.

FIG. 1

EP 2 582 153 A1

**Description**

BACKGROUND

Portable electronic devices are currently used for many different applications that require audio reproduction, including, for example, playback of media files and participation in voice communication sessions. For these and other applications, it is common for portable electronic devices to include an integrated speaker. Many portable electronic devices are designed to have small physical dimensions that impose limitations on the size of the integrated speaker and its corresponding back volume and hence on the audio performance of the portable electronic device.

SUMMARY

Magnetic induction is used for the transfer of audio signals from a portable electronic device to an external audio reproduction accessory. The portable electronic device comprises a magnetic audio interface and the external audio reproduction accessory comprises a magnetic audio interface coupled to a sound-producing element that operates from an induced magnetic signal without the need for additional power in the audio reproduction accessory. The magnetic audio interfaces of the portable electronic device and the audio reproduction accessory may be designed to provide a desirable frequency response so as to preserve the quality of audio originating from the portable electronic device.

The portable electronic device may cause analog audio signals in the portable electronic device to be routed to the portable electronic device's magnetic audio interface in response to the portable electronic device's processor automatically determining the presence of conditions for magnetic coupling of the portable electronic device and the audio reproduction accessory.

The conditions may include any or any combination of the following factors:

● proximity of the portable electronic device to the audio reproduction accessory;

● proximity of the portable electronic device's magnetic audio interface to the audio reproduction accessory's magnetic audio interface;

● where the portable electronic device's magnetic audio interface includes a transmit coil, detection of a voltage across the transmit coil that exceeds, at least momentarily, a threshold;

● detection by an integrated microphone of the portable electronic device of sound corresponding to a test audio signal induced into the portable electronic device's magnetic audio interface.

As described in further detail below, the portable electronic device may cease the routing of the analog audio signals to the portable electronic device's magnetic audio interface in response to the portable electronic device's processor automatically determining the lack of conditions for magnetic coupling between the portable electronic device and the audio reproduction accessory. If the portable electronic device includes an integrated speaker or an electromechanical connector (for example, jack, socket, USB) or a wireless interface or any combination thereof, the portable electronic device may cause the analog audio signals to be routed to the integrated speaker or to the electromechanical connector or to the wireless interface in response to the portable electronic device's processor automatically determining the lack of conditions for magnetic coupling between the portable electronic device and the audio reproduction accessory.

When an audio reproduction accessory for a portable electronic device is magnetically coupled to the portable electronic device, the sole source of energy for audible sound generated by the audio reproduction accessory may be energy contained in a magnetic field that acts on the audio reproduction accessory, the magnetic field produced by a magnetic audio interface of the portable electronic device.

BRIEF DESCRIPTION OF THE DRAWINGS

Embodiments are illustrated by way of example and not limitation in the figures of the accompanying drawings, in which like reference numerals indicate corresponding, analogous or similar elements, and in which:

FIG. 1 is a simplified functional block diagram of an example portable electronic device and of an example audio reproduction accessory;

FIG. 2 is an plot of an example voltage waveform across a transmit coil in an example portable electronic device;

FIG. 3 is a simplified illustration of an example portable electronic device and of an example audio reproduction accessory;

FIG. 4 is a simplified functional block diagram of an example portable electronic device and of an example audio reproduction accessory;

FIGS. 5 - 8 are simplified illustrations of example methods to be performed by an example audio reproduction accessory;

FIG. 9 is a simplified functional block diagram of an example audio reproduction accessory;

It will be appreciated that for simplicity and clarity of illustration, elements shown in the figures have not necessarily been drawn to scale. For example, the dimensions of some of the elements may be exaggerated relative to other elements for clarity.

DETAILED DESCRIPTION

In the following detailed description, numerous specific details are set forth in order to provide a thorough understanding of the described technology. However it will be understood by those of ordinary skill in the art that the described technology may be practiced without these specific details. In other instances, well-known methods, procedures, components and circuits have not been described in detail so as not to obscure the described technology.

Many portable electronic devices include an integrated speaker for audio reproduction. As discussed below, examples of portable electronic devices include, but are not limited to, cellular phones, smart phones, media players and portable computers (such as tablet computers or laptop computers). Some portable electronic devices may be handheld, that is, sized and shaped to be held or carried in a human hand. Due to the dimensional constraints of the portable device, there may be a restriction in the space available for the integrated speaker and for a supporting acoustical volume (e.g. "back volume") inside the portable electronic device. As a result, audio output performance of the portable electronic device may suffer in frequency response, output power and/or other audio quality measures. For example, the frequency range may be limited and portions of the frequency range may be attenuated relative to others. It is typical in small portable electronic devices that the low frequency range (e.g. "bass") is less pronounced than the high frequency range (e.g. "treble").

In order to provide improved audio quality, many portable electronic devices include means for connectivity to other devices capable of reproducing sound. In one example, a portable electronic device may comprise an electromechanical connector, often called a jack or socket, capable of providing analog audio signals to an external audio reproduction device. In another example, a portable electronic device may comprise an electromechanical connector such as a USB (Universal Serial Bus) or HDMI (High Definition Multimedia Interface) connector capable of providing digital audio signals to an external audio reproduction device. In a yet another example, a portable electronic device may comprise a wireless interface capable of providing digital audio signals to an external audio device. The wireless interface may be compatible with wireless standards, such as the Institute of Electrical and Electronics Engineers 802.11 (IEEE 802.11™) standards, with any of the Bluetooth® standards, WUSB (Wireless USB) standards or with any other communications standards or proprietary protocols.

Headphones are an example of an external audio reproduction device. Headphones may provide a perceived higher audio quality than that provided by the integrated speaker as they can be placed directly inside the ear (e.g. ear buds) or enclose an acoustical volume around the ears that improves the headphones' frequency response. Alternatively, an external audio system that includes a powered amplifier and one or more loudspeakers may be connected to the portable electronic device such that loudspeakers of the external audio system are able to reproduce audio from signals received from the portable electronic device. As there may be fewer constraints on the size of external speakers, their back volume and the electronics that drive them compared to the constraints on a loudspeaker embedded in the portable electronic device, an improved audio quality may be achieved relative to that achievable from a loudspeaker embedded in the portable electronic device.

Although the usage of electromechanical connectors, wireless interfaces and external powered audio reproduction systems is common, there are some inherent disadvantages associated with these methods of audio reproduction.

Electromechanical connectors, especially ones that need to be manipulated by users, may consume a relatively large space inside the portable electronic device and may provide an opening for dust or static electricity to penetrate and damage the portable electronic device. Such connectors may require an accurate (and hence costly) placement procedure at manufacturing and may also be prone to mechanical malfunctions. Furthermore, due to the small size of many electromechanical connectors and the evershrinking dimensions of portable electronic devices, it may be difficult for some users to manipulate such connectors. In addition, the presence of electromechanical connectors may reduce the aesthetic appeal of portable electronic devices. Therefore, in some contexts, it may be of interest to reduce the usage of connectors in portable devices.

Although the use of a wireless network interface of the portable electronic device to provide audio signals to an external audio reproduction device may eliminate the use of an electromechanical connector in this context, there may be other disadvantages associated with this arrangement. For example, the addition of a wireless network interface may increase the cost of the portable device and reduce battery life due to the additional energy consumed by the interface. There is also the inherent complexity associated with initiating and maintaining a wireless connection via the wireless network interface, including proper configuration and pairing of the portable electronic device and the external audio reproduction device.

The requirement of a corresponding wireless network interface in the external audio reproduction device may be disadvantageous for similar reasons, including, for example, the increased cost associated with the wireless network interface and the increased energy required from batteries or power adapters. In addition, the circuitry and energy required by the external audio system for amplification of audio signals received from the portable electronic device may make the use of such a system relatively expensive. Both the wireless network interface and the powered electronic circuitry in an external audio system require the use of an energy source, such as batteries or alternating current (AC) adaptors. Batteries require replacement and/or charging, while AC adaptors restrict the portability of the external audio system.

For at least the reasons stated above, it may be of interest in some applications to avoid the use of electromechanical connectors and wireless network interfaces to carry audio signals from a portable electronic device to an external audio reproduction device. It may also be of interest to eliminate the need to provide power to the external audio reproduction device.

Another technique for improving aspects of audio reproduction is known in the art as "horn loading" and provides purely acoustical amplification without any electronic means. Similarly to a gramophone, such as those used at the beginning of the twentieth century, a horn or a similar wave-conducting structure may be attached to an acoustical wave source, such as a pickup or a loudspeaker. The horn reduces the effective acoustic resistance experienced by the wave source and increases its efficiency. Thus, for a given drive level or input signal to the loudspeaker, the horn may provide an increase in the amplitude of the audio output. The horn may direct the sound waves in a particular direction, providing additional directional amplification to the sound waves. Contemporary products use the horn loading concept to passively amplify sound from portable electronic devices. Such products include a receptacle for acoustically coupling the integrated speaker of the portable electronic device to a horn-like structure. Examples include the BONE™ Horn Stand (manufactured by FRUITSHOP International Co., Ltd of Taipei, Taiwan) and the AirCurve™ (manufactured by Griffin Technology of Nashville, TN, USA).

Horn loaded passive amplification solutions indeed eliminate the need for electromechanical connectors, wireless network interfaces and external power sources. However, the sound source to the horn is the integrated speaker of the portable electronic device, which suffers from the inherent sound limitations described previously. Therefore, although these horn loading devices may achieve audio amplification, for example of 10 dB (Decibels), the audio reproduction may still suffer from a limited frequency response. Another disadvantage of horn loading devices is the relatively large size needed for the horn to achieve notable amplification.

The technology described hereinbelow provides external audio reproduction accessories that are capable of improving the quality of sound from portable electronic devices in frequency response or amplification or both without the necessity of electromechanical connectors and powered electronics and without the limitations associated with passive horn loading. For example, accessories to portable electronic devices such as holsters and cradles may incorporate such abilities in addition to their other functionality. In another example, a handsfree car kit may be capable of improving the quality of sound from portable electronic devices without being powered and without the use of an electromechanical connector to transfer the audio signals. Furthermore, the external audio reproduction accessory portion of the handsfree car kit may be designed to direct the sound that it reproduces towards the driver of the car, rather than muffled by a visor or the interior roof of the car. This may improve the perceived loudness of the sound, even where the external audio reproduction accessory does not improve the frequency response or amplification or both.

As described in further detail below, magnetic induction is used for the transfer of audio signals from a portable electronic device to an external audio reproduction accessory. The portable electronic device comprises a magnetic audio interface and the external audio reproduction accessory comprises a magnetic audio interface coupled to a sound-producing element that operates from an induced magnetic signal without the need for additional power in the audio reproduction accessory. The magnetic audio interfaces of the portable electronic device and the audio reproduction accessory may be designed to provide a desirable frequency response so as to preserve the quality of audio originating from the portable electronic device.

As described in further detail below, the portable electronic device may cause analog audio signals in the portable electronic device to be routed to the portable electronic device's magnetic audio interface in response to the portable electronic device's processor automatically determining the presence of conditions for magnetic coupling of the portable electronic device and the audio reproduction accessory.

The conditions may include any or any combination of the following factors:

● proximity of the portable electronic device to the audio reproduction accessory;

● proximity of the portable electronic device's magnetic audio interface to the audio reproduction accessory's magnetic audio interface;

● where the portable electronic device's magnetic audio interface includes a transmit coil, detection of a voltage across the transmit coil that exceeds, at least momentarily, a threshold;

● detection by an integrated microphone of the portable electronic device of sound corresponding to a test audio signal induced into the portable electronic device's magnetic audio interface.

As described in further detail below, the portable electronic device may cease the routing of the analog audio signals to the portable electronic device's magnetic audio interface in response to the portable electronic device's processor automatically determining the lack of conditions for magnetic coupling between the portable electronic device and the audio reproduction accessory. If the portable electronic device includes an integrated speaker or an electromechanical connector (for example, j ack, socket, USB) or a wireless interface or any combination thereof, the portable electronic device may cause the analog audio signals to be routed to the integrated speaker or to the electromechanical connector or to the wireless interface in response to the portable electronic device's processor automatically determining the lack of conditions for magnetic coupling between the portable electronic device and the audio reproduction accessory.

Magnetic coupling of audio signals is currently used between hearing aids and hearing aids-compatible wireless communication devices. One standard that governs the magnetic interface between wireless communication devices and hearing aids is the ANSI standard C63.19-2007 Entitled "Methods of Measurement of compatibility between wireless communication devices and hearing aids".

Conventional hearing aids are equipped with a microphone, an amplifier and a receiver speaker. The microphone picks up sounds from the environment and sends them to the amplifier, which amplifies the sounds and sends them to the receiver speaker. Sound produced by the receiver speaker is directed into the ear canal, typically via an ear mold.

Alternatively or additionally, many hearing aids are able to receive sound information from a compatible source using magnetic induction. These types of hearing aids are equipped with a small "pick-up" coil known as a telecoil or T-coil, consisting of a core around which an insulated conducting wire is coiled. A telecoil responds to magnetic field variations rather than sound vibrations. When activated manually, the telecoil may be able to detect magnetic signals from an inductive field that is produced by a hearing aid-compatible device, where the magnetic signals are representative of audio signals.

In one example, a voice coil in a telephone speaker induces a voltage in the telecoil of the hearing aid. This voltage is then amplified by an amplifier of the hearing aid and translated into sound by a receiver speaker of the hearing aid. In order to fit the hearing aid on or inside a user's ear, the hearing aid receiver speaker is necessarily small, and its back volume is correspondingly limited. A hearing aid amplifier inherently requires a source of power, such as a battery, which requires periodic replacement and/or charging.

With a hearing aid compatible wireless communication device, a user decides between one mode of operation in which the wireless device operates its telecoil interface for audio reproduction and another mode of operation in which the device activates any other sound reproduction methods. The switching is not done automatically, but is manually controlled by the user.

In the technology described in this document, a portable electronic device comprises an audio system that enables an analog audio signal to be routed selectively to an integrated speaker of the portable electronic device or to a magnetic audio interface of the portable electronic device or, if it exists, to an electromechanical connector of the portable electronic device or, if it exists, to a wireless interface of the portable electronic device. The magnetic audio interface of the portable electronic device may comprise one or more stationary coils, which for clarity purposes are referred to in this document as "transmit coils". The passage of an alternating current I of the analog audio signal through the transmit coil produces a magnetic vector field B that exists inside and outside of the loops of the transmit coil. In an example simple case of a single-loop transmit coil of radius R, the magnetic field $B$ at a distance $x$ from the center of the loop and along a line that is perpendicular to the plane of the loop may be expressed using the Biot-Savart Law:

$$B = \mu_0 I R^2 / (2(R^2 + x^2)^{3/2}) \qquad [1]$$

where , $\mu 0$ is the magnetic constant. The direction of magnetic field $B$ along the line alternates according to the direction of the alternating current $1$.

Consider a situation where a second coil (a "pick-up" coil) is placed in close proximity to the transmit coil such that the two coils are in an open core transformer orientation - loops of the transmit coil and the pick-up coil are placed side-by-side and their loops have substantially the same orientation. In this situation, the magnetic field B created by the transmit coil induces across the pick-up coil a voltage that corresponds in magnitude and direction to the alternating current *I*. The induced voltage is translated into an induced current over electric impedance connected to terminals of the pick-up coil.

Consider instead a situation where a permanent magnet is placed in close proximity to the transmit coil such that a magnetic axis of the permanent magnet is perpendicular to the planes of the loops of the transmit coil and is substantially collinear with the centers of the loops. In this situation, the passage of an alternating current *I* through the loops of the transmit coil creates a magnetic field vector B along the magnetic axis of the permanent magnet, and the magnetic field applies force to the permanent magnet. The magnitude and direction of the force correspond to the magnitude and direction of the magnetic field vector *B* and hence to the alternating current *I*. If this force is strong enough, it may cause the permanent magnet to move along its magnetic axis.

In one implementation of the described technology, a stationary transmit coil is mounted inside a housing of a portable electronic device in close proximity to a portion of an external surface of the portable electronic device's housing. For example, one edge of the transmit coil may be placed between 0.1 millimeters to 3 millimeters, or less than 1 millimeter, from the external surface portion of the portable electronic device's housing. The orientation of the transmit coil relative to the portable electronic device's housing is such that the direction of a magnetic field vector *B* through the loops of the transmit coil is s *substantially parallel to* the external surface portion of the portable electronic device's housing. In the example of the transmit coil forming a hollow cylindrical shape, the cylindrical axis of the transmit coil is therefore *substantially parallel to* the external surface portion of the portable electronic device's housing.

In this implementation of the described technology, an audio reproduction accessory includes a stationary pick-up coil and a sound-producing element, both mounted inside a housing of the audio reproduction accessory. The pick-up coil, which is the audio reproduction accessory's magnetic audio interface, may be electrically coupled, directly or via passive electronic components, to the sound-producing element. The pick-up coil is mounted in close proximity to a portion of an external surface of the audio reproduction accessory's housing. For example, one edge of the pick-up coil may be placed between 0.1 1 millimeters to 3 millimeters, or less than 1 millimeter, from the external surface portion of the audio reproduction accessory's housing. The orientation of the pick-up coil relative to the audio reproduction accessory's housing is such that, in the example of the pick-up coil forming a hollow cylindrical shape, the cylindrical axis of the pick-up coil is **substantially parallel to** the external surface portion of the audio reproduction accessory's housing.

In this implementation of the described technology, the portable electronic device and the audio reproduction accessory are considered to be in a coupling configuration when they are placed such that the external surface portion of the portable electronic device's housing and the external surface portion of the audio reproduction accessory's housing are in close proximity to each other and the cylindrical axis of the transmit coil is **substantially parallel to** the cylindrical axis of the pick-up coil. Consider the situation where the portable electronic device and the audio reproduction accessory are in the coupling configuration and the portable electronic device's audio system routes analog audio signals to its magnetic audio interface. In this situation, i) the analog audio signals may generate a corresponding alternating magnetic field vector *B* through the loops of the transmit coil, ii) the alternating magnetic field vector *B* may induce an alternating current in the pick-up coil, and consequently, iii) the sound-producing element of the audio reproduction accessory may produce sound waves corresponding to the audio signals. In the example where the sound-producing element is a moving coil loudspeaker, the moving coil of the loudspeaker may receive the alternating current from the pick-up coil and may convert the alternating current into sound waves.

In an alternative implementation of the described technology, a stationary transmit coil is mounted inside a housing of a portable electronic device in close proximity to a portion of an external surface of the portable electronic device's housing. For example, one edge of the transmit coil may be placed between 0.1 millimeters to 3 millimeters, or less than 1 millimeter, from the external surface portion of the portable electronic device's housing. The orientation of the transmit coil relative to the portable electronic device's housing is such that the direction of a magnetic field vector B through the loops of the transmit coil is **substantially perpendicular to** the external surface portion of the portable electronic device's housing. In the example of the transmit coil forming a hollow cylindrical shape, the cylindrical axis of the transmit coil is therefore **substantially perpendicular to** the external surface portion of the portable electronic device's housing.

In this implementation of the described technology, an audio reproduction accessory includes a sound-producing element having a flexible diaphragm affixed to a permanent magnet and to a rigid frame. The permanent magnet, which is the audio reproduction accessory's magnetic audio interface, is affixed to a center of the diaphragm such that movement of the permanent magnet along its magnetic axis may cause movement of the diaphragm relative to the rigid frame along the magnetic axis, thereby creating changes in air pressure inside the audio reproduction accessory's housing. The sound-producing element is mounted inside a housing of the audio reproduction accessory such that i) an edge of the permanent magnet associated with one magnetic pole is in close proximity to a portion of an external surface of the audio reproduction accessory's housing (for example, no further than 2 millimeters from the external surface portion); and ii) the magnetic axis of the permanent magnet is perpendicular to the external surface portion of the audio reproduction accessory's housing.

In this implementation of the described technology, the portable electronic device and the audio reproduction accessory are considered to be in a coupling configuration when they are placed such that the external surface portion of the portable electronic device's housing and the external surface portion of the audio reproduction accessory's housing are in close proximity to each other. Consider the situation where the portable electronic device and the audio reproduction accessory are in the coupling configuration and the portable electronic device's audio system routes analog audio signals to its magnetic audio interface. In this situation, i) the analog audio signals may generate a corresponding alternating magnetic field vector *B* through the loops of the transmit coil, ii) the alternating magnetic field vector *B* may induce corresponding movements of the permanent magnet along its magnetic axis and hence of the diaphragm relative to the rigid frame, and consequently, iii) the sound-producing element of the audio reproduction accessory may produce sound waves corresponding to the audio signals.

The audio reproduction accessory may include mechanical guides to aid in the placement and alignment of the portable electronic device relative to the audio reproduction accessory to achieve the coupling configuration. In one example, the audio reproduction accessory (for example, a holster) may include a pocket to hold most of the portable electronic device. The pocket size and shape may act as mechanical guides for this purpose. In another example, the accessory (for example, a docking station) may include a receptacle to receive a portion of the portable electronic device. The receptacle size and shape may act as mechanical guides for this purpose. In a yet another example, the accessory may include visual guides instead of mechanical guides, to direct a user of how to place the portable electronic device and the accessory in the coupling configuration.

Examples of audio reproduction accessories include devices that have other (that is, non-audio reproduction) functionality, such as a holster, a cradle, a handsfree car kit, a docking station, and the like. In another example, the sole functionality of an accessory would be to reproduce sound from audio signals in the portable electronic device.

An audio reproduction accessory may have sufficient dimensions to provide a back volume that is larger than the back volume available for an integrated speaker of the portable electronic device to which it is to be magnetically coupled. The larger back volume may support reproduction of a relatively higher audio quality than that available using the integrated speaker of the portable electronic device.

A loudspeaker of an audio reproduction accessory may have higher impedance than an integrated speaker of a portable electronic device, for example, 32 to 800 ohms, or 100 to 300 ohms. An integrated speaker of a portable electronic device may typically have an impedance of 8 ohms. The relatively higher impedance of the loudspeaker of the audio reproduction accessory may enable efficient transfer of energy from the transmit coil to the loudspeaker such that the energy is sufficient for the loudspeaker to reproduce sound in an efficient manner.

In an experiment, the inventors placed a transmit coil and a pick-up coil 3 millimeters from one another. A loudspeaker having an impedance of 55 ohms was connected to the pick-up coil and a test signal of 1.48 Volt RMS (Room Mean Square) representing voice signal was injected to the transmit coil. At a distance of 30cm from the loudspeaker, sound pressure of 60.5 dBSPL(A) (Decibel Sound Pressure Level, A-weighted) was measured. A test signal of 2.93 Volt RMS increased the sound pressure to 65.5 dBSPL(A) and additional replacement of the loudspeaker to one having a 300 ohms impedance further increased the sound pressure to 80.2 dBSPL(A). Reduction of the distance between the transmit coil and the pick-up coil to 1.5mm further increased the sound pressure to 86.2 dBSPL(A) and selection of a transmit coil and a pick-up coil for a flatter frequency response further increased the sound pressure to 88.2 dBSPL(A). An acoustic optimization tested at the audio reproduction accessory further increase the sound pressure to 101.2 dBSPL(A).

The inventors further tested sound pressure generated by 12 example mobile phones at 30 centimeters from their loudspeakers. The results were in the range of 55-60 dBSPL(A). Consequently, it was demonstrated that with the technology presented in this document, sound can be generated by a magnetically coupled accessory with a higher sound pressure and by using only energy contained in a magnetic field originating from the portable electronic device.

Components forming the magnetic interface between the portable electronic device and the passive audio reproduction accessory may be selected to provide a desired frequency response. With compatibility to the ANSI standard C63.19-2007, magnetic interface provides a 6dB/octave incline in the frequency response the magnetic interface. However, selection of transmit and pick-up coils of the magnetic interface can provide a much flatter frequency response, which may be desirable for an increase in both audio quality and sound pressure. For example, a frequency response flatness of ±2dBV between 400Hz and 20kHz was achieved by the inventors, compared to ±6dB between 800Hz and 3100Hz that is a standard requirement for a narrow band voice call in loudspeaker mode.

The results of the tests conducted by the inventors are not limiting and are presented for the purpose of the demonstrating the usefulness of the technology.

A portable electronic device may include a detection system for automatically detecting whether the portable electronic device and an audio reproduction accessory are in close proximity or - even better - in a coupling configuration.

For example, the audio reproduction accessory may include a permanent magnet and the portable electronic device may include a Hall effect sensor to sense proximity of the audio reproduction accessory's permanent magnet. In the example of the audio reproduction accessory including a holster, placement of the permanent magnet in the holster and placement of the Hall effect sensor in the portable electronic device may be designed for detection of the portable electronic device being "holstered" or inserted inside a pocket of the holster and may be further designed for detection of the portable electronic device and the audio reproduction accessory being in the coupling configuration.

In another example, the portable electronic device may be configured to automatically detect voltage spikes across its transmit coil. Such voltage spikes may be induced by movement of a pick-up coil of an audio reproduction accessory or a permanent magnet of an audio reproduction accessory in close proximity to the transmit coil as the audio reproduction accessory and the portable electronic device are placed in the coupling configuration. Sources other than the permanent magnet or the pick-up coil of the audio reproduction accessory may induce voltage spikes across the transmit coil, so the detection of the voltage spikes on its own may be unreliable for determining that an audio reproduction accessory is in the coupling configuration with the portable electronic device.

To further determine whether it is in the coupling configuration with an audio reproduction accessory, and to test the quality of magnetic coupling, the portable electronic device, in response to detection of voltage spikes across its transmit coil may conduct a sound loop test. In the sound loop test, the portable electronic device induces a test audio signal into its transmit coil, thus temporarily activating the magnetic interface, and monitors an integrated microphone of the portable electronic device for receipt of sound corresponding to the test audio signal. With receipt of sound corresponding to the test audio signal via the microphone, the portable electronic device may determine that it is in a coupling configuration with an audio reproduction accessory. Optionally, the portable electronic device may further measure properties of the received sound such as distortions and/or other sound properties to verify whether the magnetic coupling is of sufficient strength.

Having determined that it is in a coupling configuration with an audio reproduction accessory and optionally, that the magnetic coupling is of sufficient strength, the portable electronic device may automatically route subsequent audio signals (for example, from media files or a communication session) to a transmit coil of the portable electronic device in order for the audio to be reproduced by the audio reproduction accessory.

The portable electronic device may stop routing audio signals from media files or communication sessions to the transmit coil if it determines that an audio reproduction accessory is not sufficiently magnetically coupled to the transmit coil. For example, if the portable electronic device detects that the audio reproduction accessory is no longer in close proximity to the portable electronic device, the portable electronic device may determine that the audio reproduction accessory is not sufficiently magnetically coupled to the transmit coil.

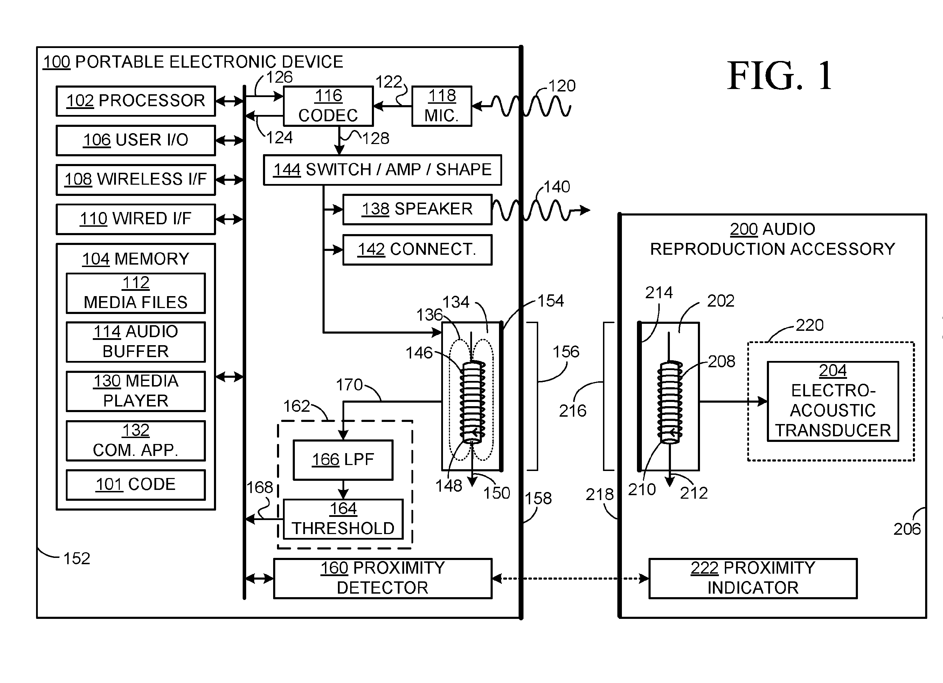

FIG. 1 is a simplified functional block diagram of an example portable electronic device 100 and an example audio reproduction accessory 200. Examples of portable electronic device 100 include a mobile communications device, a wireless communication device, a smart phone, a personal digital assistant (PDA), a personal media player, an electronic-book reader, a gaming device, a camera, a camcorder, a remote control, an electronic navigation device (such as a global positioning system (GPS) device), an ultra-mobile personal computer (PC), and the like. For clarity, some components and features of portable electronic device 100 are not shown in FIG. 1 and are not explicitly described. Functions included in portable electronic device 100 may be implemented and distributed in any desired way among physical components of device 100, such as integrated circuits, discrete components, printed circuit boards (PCBs), assemblies and subassemblies.

Portable electronic device 100 includes one or more processors 102 and a memory 104 coupled to one or more of processors 102. Portable electronic device 100 may include any number and type of user I/O (input/output) components 106, operable by any of processors 102. Portable electronic device 100 may optionally include one or more wireless communication interfaces 108 and/or one or more wired communication interfaces 110, coupled to processors 102. By way of any of communication interfaces 108 and 110, portable electronic device 100 may optionally be capable to receive media files 112 and/or decompressed (streamed) digital audio from other devices. Portable electronic device 100 may be capable of storing media files 112 in memory 104 and of temporarily storing portions of the received decompressed (streamed) digital audio in an audio buffer 114 in memory 104.

Portable electronic device 100 includes an audio coder-decoder (codec) 116 coupled to any of processors 102. Portable electronic device 100 may include one or more integrated audio input elements 118, for example microphones, able to receive sound waves 120 and to output corresponding analog signals 122 to audio codec 116. Audio codec 116 may be able to receive analog signals 122 and to output digital audio representations 124 of analog signals 122 to processor 102. Digital audio representations 124 may be stored in one of media files 112 in memory 104 for later playback or may be otherwise used by portable electronic device 100.

Audio codec 116 may be able to receive digital audio representations 126 of sound waves and to construct analog audio signals 128 corresponding to digital audio representations 126. The source of digital audio representations 126 may be, for example, in media files 112, audio buffer 114 or any other source. In an example, memory 104 may store a media player application 130 to be executed by processors 102. Media player application 130 may be able to extract digital audio representations 126 from media files 112 into audio buffer 114 and to forward digital audio representations 126 from audio buffer 114 to codec 116.

In another example, media player application 130 may be able to manage reception of streamed digital audio via any of communication interfaces 108 and 110 into audio buffer 114 and forwarding streamed digital audio from audio buffer 114 to codec 116 as digital audio representations 126. In a yet another example, portable electronic device 100 may participate in a communication session, for example a telephone call or a video conference, with one or more other communication devices. A communication application 132 stored in memory 104 may manage reception of streamed digital audio of the communication session via any of communication interfaces 108 and 110 to audio buffer 114 and forwarding of streamed digital audio from audio buffer 114 to codec 116 as digital audio representations 126.

Portable electronic device 100 comprises a transmit coil 134 to receive analog audio signals 128 and to convert analog audio signals 128 into a corresponding magnetic field 136. Magnetic field 136 may contain audio information derived from audio signals 128 and is to affect audio reproduction accessory 200.

Optionally, portable electronic device 100 may comprise one or more integrated speakers 138 capable of converting audio signals 128 into sound waves 140. Optionally, portable electronic device 100 may comprise an electromechanical connector 142, often called a jack or a socket, to electrically conduct audio signals 128 to another device (not shown).

If portable electronic device 100 includes any of integrated speakers 138 and/or connector 142 in addition to transmit coil 134, it may include a switching mechanism 144 to route audio signals 128 selectively to integrated speakers 138, connector 142 or transmit coil 134 and, optionally, to shape and amplify audio signals 128 according to the component to which they are to be routed. Switching mechanism 144 may be controllable by processors 102, by audio codec 116 or by both. Any portion of switching mechanism 144 may be implemented as part of audio codec 116.

For the purpose of illustration, transmit coil 134 is shown forming a cylindrical shape, although other shapes are contemplated. In one particular implementation, transmit coil 134 may be a Surface Mounted Device (SMD). Transmit coil 134 includes loops 146 of insulated electric wire around an optional core 148.

Transmit coil 134 is mounted inside a housing 152 of portable electronic device 100 in close proximity to a portion 156 of an external surface 158 of housing 152. For example, an edge 154 of transmit coil 134 may be placed between 0.1 millimeters to 3 millimeters, or less than 1 millimeter, from portion 156 of external surface 158. The orientation of transmit coil 134 relative to housing 152 is such that a cylindrical axis 150 of transmit coil 134 is *substantially parallel to* portion 156 of external surface 158.

Audio reproduction accessory 200 includes a stationary pick-up coil 202 and a sound-reproducing electroacoustic transducer 204, both mounted inside a housing 206 of audio reproduction accessory 200. Pick-up coil 202 may be electrically coupled, directly or via passive electronic components (not shown), to sound-reproducing electroacoustic transducer 204. In an example, sound-reproducing electroacoustic transducer 204 is a moving-coil loudspeaker. In another example, sound-reproducing electroacoustic transducer 204 is a magnetostrictive loudspeaker. For the purpose of illustration, pick-up coil 202 is shown forming a cylindrical shape, although other shapes are contemplated. In one particular implementation, pick-up coil 202 may be a Surface Mounted Device (SMD). Pick-up coil 202 includes loops 208 of insulated electric wire around an optional core 210.

Pick-up coil 202 is mounted inside housing 206 of audio reproduction accessory 200 in close proximity to a portion 216 of an external surface 218 of housing 206. For example, an edge 214 of transmit coil 202 may be placed between 0.1 millimeters to 3 millimeters, or less than 1 millimeter, from portion 216 of external surface 218. The orientation of pick-up coil 202 relative to housing 206 is such that a cylindrical axis 212 of pick-up coil 202 is *substantially parallel to* portion 216 of external surface 218.

Audio reproduction accessory 200 may include a back volume 220 surrounding at least a portion of sound-reproducing electroacoustic transducer 204 to improve the audio performances of sound-reproducing electroacoustic transducer 204 and consequently of audio reproduction accessory 200.

Portable electronic device 100 and audio reproduction accessory 200 may include a mechanism to enable portable electronic device 100 to detect automatically proximity of audio reproduction accessory 200. The mechanism may include, for example, a proximity indicator 222 at audio reproduction accessory 200 and a corresponding proximity detector 160 at portable electronic device 100. In one example, proximity indicator 222 may be a magnet and proximity detector 160 may be a magnetic field detector such as a Hall effect sensor. In another example, proximity indicator 222 may be an RFID tag and proximity detector 160 may be an RFID tag reader.

In the example that audio reproduction accessory 200 is a holster for portable electronic device 100, portable electronic device 100 may determine that it is "holstered" inside audio reproduction accessory 200 if proximity detector 160 detects proximity indicator 222. Although proximity indicator 222 and proximity detector 160 may provide an indication of proximity of portable electronic device 100 and audio reproduction accessory 200, they may be designed to provide a more accurate indication of the proximity of areas 156 and 216. For example, proximity detector 160 may detect proximity indicator 222 only if areas 156 and 216 are in close proximity and aligned to each other.

To achieve this result, the location of proximity detector 160 in portable electronic device 100 and the location of proximity indicator 222 in audio reproduction accessory 200 may be selected to align when areas 156 and 216 are aligned. In addition, the strength of the electric field or the magnetic field of proximity indicator 222 and a corresponding detection threshold of proximity detector 160 may be designed for detection only when areas 156 and 216 are in close proximity and aligned to each other.

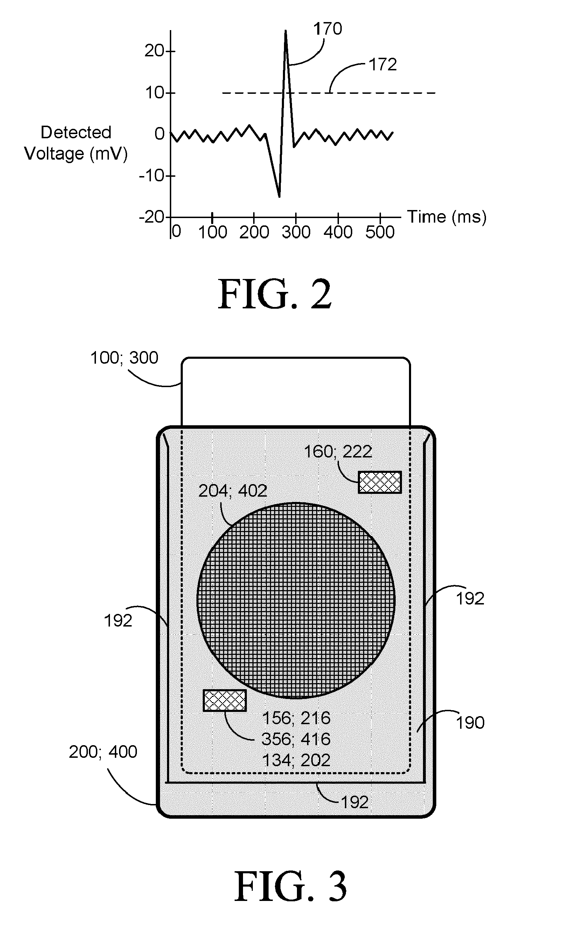

Portable electronic device 100 may further include a magnetic coupling detection circuit 162 for automatic detection of pick-up coil 202 becoming in close proximity to transmit coil 134 and optionally for automatic detection that pick-up coil 202 is being removed from close proximity of transmit coil 134. As shown in an example waveform at Figure 2, movement of pick-up coil 202 in the proximity of transmit coil 134 may induce a voltage spike 170 across transmit coil 134. Portable electronic device 100 may use the event that magnetic coupling detection circuit 162 detects a voltage spike 170 that exceeds a threshold 172 to assess the possibility of magnetic coupling between pick-up coil 202 and transmit coil 134.

In one example, magnetic coupling detection circuit 162 may include a threshold detector 164 such as a voltage comparator. Threshold detector 164 may receive the voltage 170, optionally via a low pass filter 166 and may output an indication 168 if voltage 170 exceeds threshold 172. Indication 168 may be readable by processor 102. In another example, threshold detector 164 may be an analog-to-digital (A/D) converter, and indication 168 may be a measurement of voltage 170. Processor 102 may read indication 168 and may perform the decision whether voltage 170 exceeds threshold 172.

FIG. 3 illustrates an example simplified shape of portable electronic device 100 and an example simplified shape of audio reproduction accessory 200. Audio reproduction accessory 200 has a pocket 190 into which portable electronic device 100 may be inserted. When audio reproduction accessory 200 is inserted into pocket 190, boundaries 192 of pocket 190 guide portable electronic device 100 to a particular position inside pocket 190. Boundaries 192 therefore serve as guides for placement and alignment of portable electronic device 100 inside pocket 190. Sound-reproducing electroacoustic transducer 204 is shown in FIG. 3 as having a circular shape, for example.

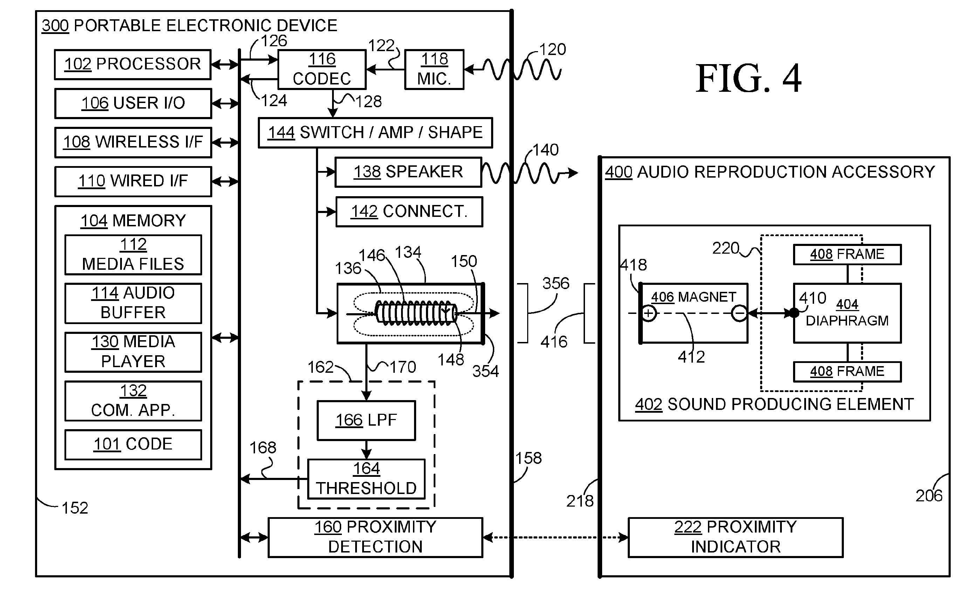

FIG. 4 is a simplified functional block diagram of an example portable electronic device 300 and an example audio reproduction accessory 400. Portable electronic device 300 is similar to portable electronic device 100, except for the orientation of transmit coil 134 inside housing 152. Transmit coil 134 is mounted inside portable electronic device 300 in close proximity to a portion 356 of external surface 158 of housing 152. For example, an edge 354 of transmit coil 134 may be placed between 0.1 millimeters to 3 millimeters, or less than 1 millimeter, from portion 356 of external surface 158. The orientation of transmit coil 134 relative to housing 152 is such that cylindrical axis 150 of transmit coil 134 is *substantially perpendicular to* portion 356 of external surface 158.

Audio reproduction accessory 400, like audio reproduction accessory 200, includes proximity indicator 222, however, it includes a sound-producing element 402 instead of pick-up coil 202 and sound-reproducing electroacoustic transducer 204.

Sound-producing element 402 includes a flexible diaphragm 404 affixed to a permanent magnet 406 and to a rigid frame 408. Permanent magnet 406 is affixed to a center 410 of diaphragm 404 such that movement of permanent magnet 406 along its magnetic axis 412 may cause movement of diaphragm 404 relative to frame 408 along magnetic axis 412, thereby creating changes in air pressure inside housing 206. Sound-producing element 402 is mounted inside housing 206 of the audio reproduction accessory 400 such that i) an edge 418 of permanent magnet 406 associated with one magnetic pole is in close proximity to a portion 416 of external surface 218 of housing 206 of audio reproduction accessory 400 (for example, no further than 2 millimeters from portion 416); and ii) magnetic axis 412 is perpendicular to portion 416 of external surface 218. Although illustrated with its positive magnetic pole closer to external surface 218 than its negative magnetic pole, permanent magnet 406 may be positioned with its negative magnetic pole closer to external surface 218 than its positive magnetic pole.

Portion 356 of external surface 158 of housing 152 of portable electronic device 300 and portion 416 of external surface 218 of housing 206 of audio reproduction accessory 400 may be placed in close proximity, and in portable electronic device 300 audio signals 128 routed to transmit coil 134 may generate a corresponding alternating magnetic field vector B through loops 146 of transmit coil 134. The alternating magnetic field vector B may induce corresponding movements of permanent magnet 406 along its magnetic axis 412 and hence of diaphragm 410 relative to rigid frame 408. As a result, sound-producing element 402 of audio reproduction accessory 400 may produce sound waves corresponding to audio signals 128.

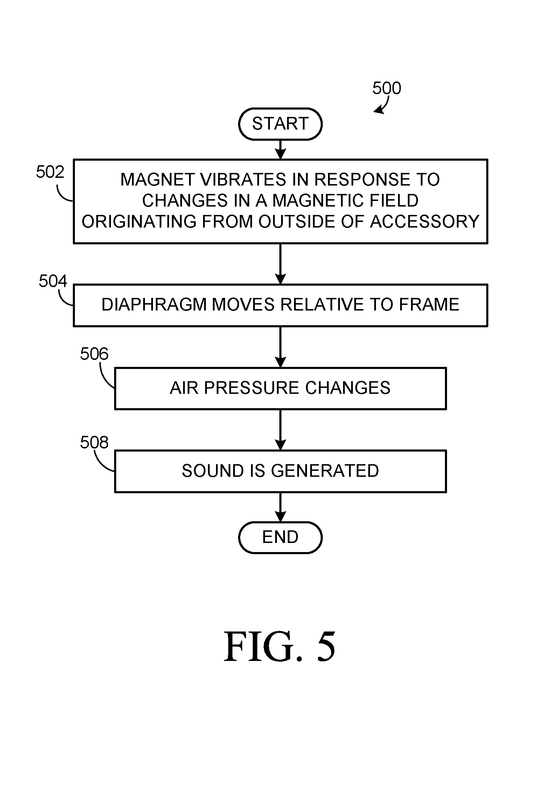

FIG. 5 is a simplified illustration of an example method 500 in audio reproduction accessory 400 for reproducing sound. At 502, permanent magnet 406 may vibrate in response to changes in a magnetic field originating from outside of audio reproduction accessory 400. For example, the magnetic field may originate from transmit coil 134 of portable electronic device 300, which is in close proximity to permanent magnet 406. At 504, the vibrations of permanent magnet 406 cause diaphragm 404 to vibrate relative to frame 408. The vibrations of diaphragm 404 relative to frame 408 may cause at 506 vibrations in air pressure in audio reproduction accessory 400, which may result in sound being generated at 508.

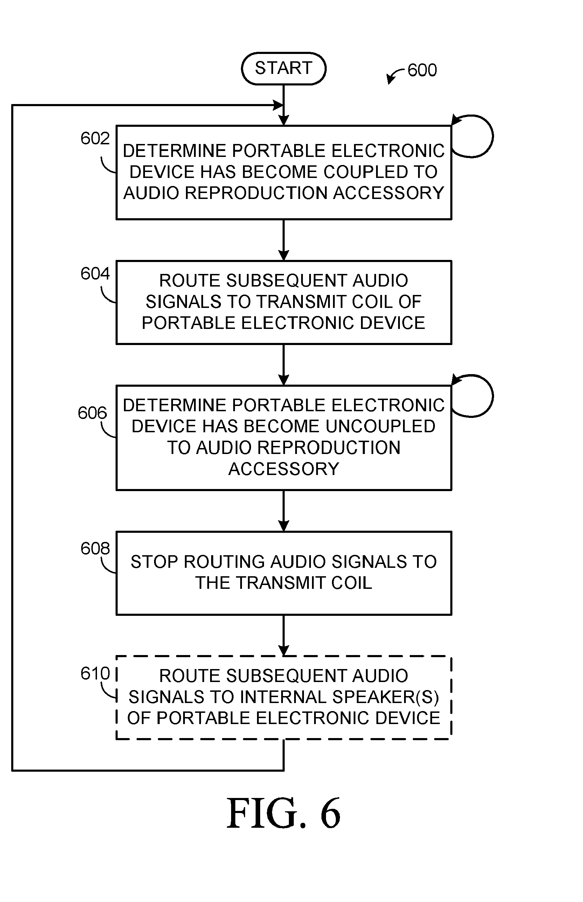

FIG. 6 is an illustration of a simplified example method 600 in portable electronic device 100 (300). At 602, portable electronic device 100 (300) checks whether it has become coupled to audio reproduction accessory 200 (400). The checking may continue as long as portable electronic device 100 (300) determines that it is not coupled to audio reproduction accessory 200 (400). If portable electronic device 100 (300) determines at 602 that it is coupled to audio reproduction accessory 200 (400), the method continue to 604. At 604, portable electronic device 100 (300) may route subsequent audio signals 128 to transmit coil 134.

At 606, portable electronic device 100 (300) checks whether it has become un-coupled from audio reproduction accessory 200 (400). The checking may continue as long as portable electronic device 100 (300) determines that it is still coupled to audio reproduction accessory 200 (400). If portable electronic device 100 (300) determines at 606 that it became un-coupled to audio reproduction accessory 200 (400), the method continue to 608. At 608, portable electronic device 100 (300) stops routing subsequent audio signals 128 to transmit coil 134. Optionally and in addition, at 610 portable electronic device 100 (300) may route subsequent audio signals 128 to integrated speaker 138 and/or to connector 142.

The term "coupled" in the description of method 600 means that audio reproduction accessory 200 (400) is able to reproduce sound of sufficient quality from energy contained in a magnetic field generated by transmit coil 134 from analog audio signals 128. Similarly, the term "un-coupled" in the description of method 600 means that audio reproduction accessory 200 (400) is not able to reproduce sound of sufficient quality from energy contained in a magnetic field generated by transmit coil 134 from analog audio signals 128.

As can be understood from simplified method 600, portable electronic device 100 (300) may not require any user intervention in a decision whether to route analog audio signals 128 to transmit coil 134. However, method 600 may be modified to request user authorization before routing analog audio signals 128 to transmit coil 134 or before stopping to route analog audio signals 128 to transmit coil 134 or before both routing and stopping to route analog audio signals 128 to transmit coil 134.

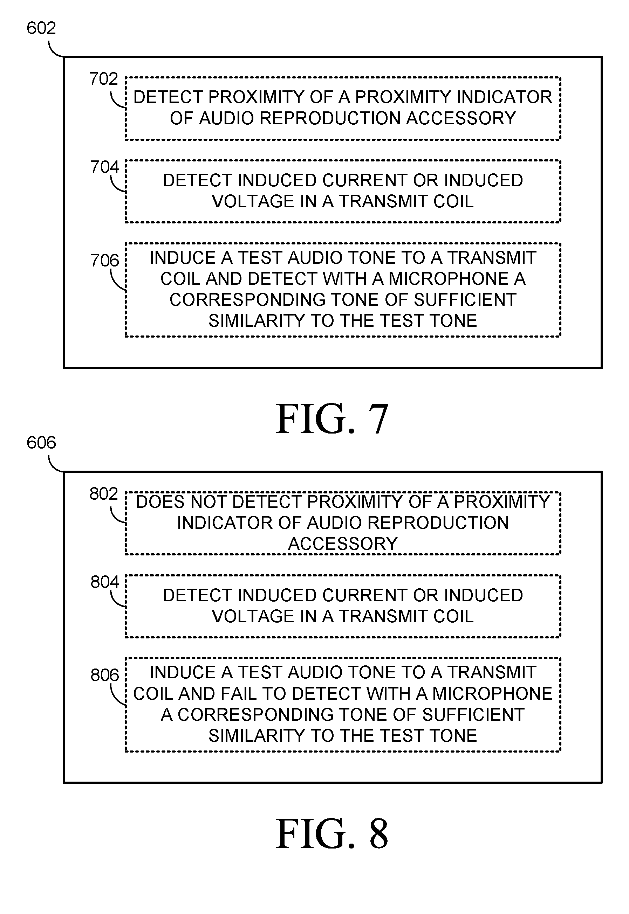

FIG. 7 is an illustration of an example of method 602 in portable electronic device 100 (300) to determine whether it has become coupled to audio reproduction accessory 200 (400). Method 602 may involve any of actions 702, 704 and 706. At 702, portable electronic device 100 (300) may detect proximity of proximity indicator 222 to proximity detector 160. At 704, portable electronic device 100 (300) may detect (using magnetic coupling detection circuit 162) induced voltage peak 170 across transmit coil 136. At 706, portable electronic device 100 (300) may induce a test audio signal 128 into transmit coil 134 and may monitor integrated microphone 118 for receipt of sound 120 corresponding to the test audio signal 128. With receipt of such a sound 120 corresponding to test audio signal 128, portable electronic device 100 (300) may conclude that audio reproduction accessory 200 (400) is coupled to transmit coil 136. At 706, portable electronic device 100 (300) may optionally further measure properties of the received sound 120 such as distortions and/or other sound properties to verify whether the magnetic coupling to audio reproduction accessory 200 (400) is of enough strength.

It may be understood that results of actions 702, 704 and 706 may provide an accumulation of certainty to portable electronic device 100 (300) that it is coupled to audio reproduction accessory 200 (400). With different designs of portable electronic device 100 (300) and audio reproduction accessory 200 (400), any or all of actions 702, 704 and 706 may be used. For example, interaction between proximity indicator 222 and proximity detector 160 may be such that proximity detector 160 can detect proximity indicator 222 only when the mechanical alignment between portable electronic device 100 (300) and audio reproduction accessory 200 (400) provide sufficient magnetic coupling. Actions 704 and/or 706 might optionally not be necessary to further test the coupling.

FIG. 8 is an illustration of an example of method 606 in portable electronic device 100 (300) to determine whether it has become uncoupled to audio reproduction accessory 200 (400). Method 606 may involve any of actions 802, 804 and 806. At 802, portable electronic device 100 (300) may not detect proximity of proximity indicator 222 to proximity detector 160 anymore. At 804, portable electronic device 100 (300) may detect (using magnetic coupling detection circuit 162) induced voltage peak 170 across transmit coil 136. At 806, portable electronic device 100 (300) may induce a test audio signal 128 into transmit coil 134 and may monitor integrated microphone 118 for receipt of sound 120 corresponding to the test audio signal 128. If such a sound 120 corresponding to test audio signal 128 is not received, portable electronic device 100 (300) may conclude that audio reproduction accessory 200 (400) is became uncoupled to transmit coil 136.

It may be understood that results of actions 802, 804 and 806 may provide an accumulation of certainty to portable electronic device 100 (300) that it is uncoupled to audio reproduction accessory 200 (400). With different designs of portable electronic device 100 (300) and audio reproduction accessory 200 (400), any or all of actions 802, 804 and 806 may be used. For example, it might be enough to determine that proximity detector 160 stopped detecting proximity indicator 222 to determine that portable electronic device 100 (300) and audio reproduction accessory 200 (400) are not coupled.

The method described herein in conjunction with audio reproduction accessory 200 (400), in which the sole source of energy for the audible sound is energy contained in a magnetic field that acts on the audio reproduction accessory 200 (400) and is produced by transmit coil 134 of portable electronic device 100 (200). However, it will be obvious to one of ordinary skill in the art that the methods would work as well with an audio reproduction accessory that uses a power source such as batteries or a power outlet in producing sound.

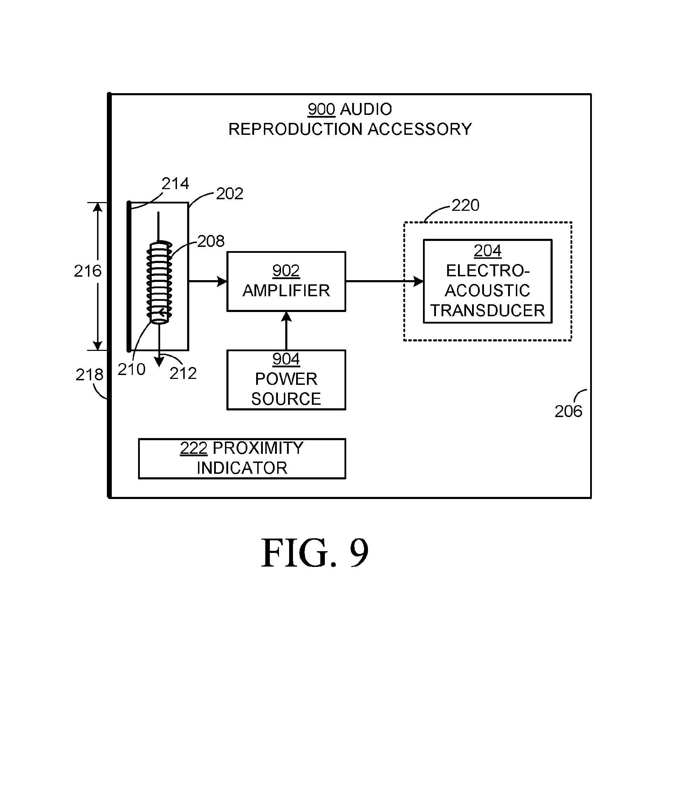

For example, FIG. 9 shows a simplified functional block diagram of an example audio reproduction device 900. Audio reproduction device 900 is similar to audio reproduction accessory 200, however, audio reproduction device 900 includes an amplifier 902 to amplify signals received from pick-up coil 202 and to forward the amplified signals to sound-reproducing electroacoustic transducer 204. Audio reproduction device 900 includes also a power source 904 to provide energy to amplifier 904. The methods described herein are applicable to coupling between portable electronic device 100 and audio reproduction device 900.

Returning now to Figure 1, memory 104 may store code 101, that when executed by any of processors 102, causes portable electronic device 100 (300) to perform any of the methods illustrated hereinabove.

A non-exhaustive list of examples of processors 102 includes microprocessors, microcontrollers, central processing units (CPUs), digital signal processors (DSPs), reduced instruction set computers (RISCs), complex instruction set computers (CISCs) and the like. Furthermore, processors 102 may comprise more than one processing unit, may be part of an application specific integrated circuit (ASIC) or may be a part of an application specific standard product (ASSP).

A non-exhaustive list of examples of memory 104 includes any combination of the following:

a) semiconductor devices such as registers, latches, read only memory (ROM), mask ROM, electrically erasable programmable read only memory (EEPROM) devices, flash memory devices, non-volatile random access memory (NVRAM) devices, synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;

b) optical devices, such as compact disk read only memory (CD ROM), and the like; and

c) magnetic devices, such as a hard disk, a floppy disk, a magnetic tape, and the like.

A non-exhaustive list of examples for standards with which wired communication interfaces 110 may comply includes Universal Serial Bus (USB), IEEE 1394 (Firewire™), Ethernet or any other suitable non-wireless interface.

A non-exhaustive list of examples for standards with which wireless communication interfaces 108 may comply includes Direct Sequence - CDMA (DS-CDMA) cellular radiotelephone communication, GSM cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM Evolution (EDGE), 3G and 4G communication, one or more standards of the 802.11 family of standards defined by the Institute of Electrical and Electronic Engineers (IEEE) for WLAN Media Access Control (MAC) layer and Physical (PHY) layer specifications, one or more Bluetooth® protocols developed by the Bluetooth® Special Interest Group (for example, Bluetooth® specifications 1.1, 1.2, 2.0, 2.1 and 3.0), one or more versions of the IEEE 802.15.1 standard, one or more versions of the IEEE 802.15.4 standard (Zigbee®), one or more versions of the Wireless Universal Serial Bus® (WUSB®) standard developed by the WUSB9 Promoter Group.

A non-exhaustive list of examples of user I/O components 106 includes display screens, touch screens, keyboards, buttons, trackballs, thumbwheels, capacitive touchpads, optical touchpads, joysticks and any other suitable user I/O component.

A non-exhaustive list of examples for media files 112 includes MPG, MOV, MWV, XFL, MP3, ACC+, WAV, MIDI, WMA, AU, AIFF files or any other suitable files.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A portable electronic device (100,300), comprising:

a processor (102);
a memory (104) coupled to the processor, able to store, at least temporarily, digital audio representations (126);
an audio coder-decoder 'CODEC' (116) coupled to the processor, and capable of generating analog audio signals (128) from the digital audio representations;
a transmit coil (134) capable of producing an alternating magnetic field (150) upon passage of the analog audio signals through the transmit coil; and

wherein the processor is operative to cause the analog audio signals to be routed from the CODEC to the transmit coil in response to automatically determining the presence of conditions for magnetic coupling between the portable electronic device and an audio reproduction accessory (200,400), and

wherein the processor is operative to cease routing of the analog audio signals from the CODEC to the transmit coil in response to automatically determining the lack of conditions for magnetic coupling between the portable electronic device and the audio reproduction accessory.

2. The portable electronic device as recited in claim 1, further comprising:

an integrated speaker (138); and
a switching mechanism (144) coupled to the CODEC, to the integrated speaker and to the transmit coil, wherein to cause the analog audio signals to be routed from the CODEC to the transmit coil, the processor is operative to control the switching mechanism to route the analog audio signals from the CODEC to the transmit coil, and to cease routing of the analog audio signals from the CODEC to the transmit coil, the processor is operative to control the switching mechanism to route the analog audio signals from the CODEC to the integrated speaker.

3. The portable electronic device as recited in claim 1 or claim 2, further comprising:

an electrical circuit (162) coupled to the transmit coil and capable of detecting a voltage level across the transmit coil,

wherein the processor is operative to monitor the electrical circuit and wherein automatically determining the presence of conditions for magnetic coupling comprises automatically detecting that the voltage level is higher, at least momentarily, than a threshold.

4. The portable electronic device as recited in any one of claims 1 to 3, further comprising:

an integrated microphone (118) coupled to the CODEC,
wherein automatically determining the presence of conditions for magnetic coupling comprises:

causing the CODEC to generate test analog audio signals that represent a test tone;
injecting the test analog audio signals to the transmit coil; and
determining that the microphone detects an audible sound corresponding to the test tone.

5. The portable electronic device as recited in any one of claims 1 to 4, further comprising:

a housing (152) for the portable electronic device, wherein the transmit coil is mounted inside the portable electronic device less than 1 millimeter from an external surface (158) of the housing, and/or
a Hall effect sensor coupled to the processor, wherein automatically determining the presence of conditions for magnetic coupling comprises automatically detecting an output of the Hall effect sensor indicative of proximity of the Hall effect sensor to a permanent magnet.

6. An audio reproduction accessory for a portable electronic device, the audio reproduction accessory capable of generating audible sound, wherein, when the audio reproduction accessory is magnetically coupled to the portable electronic device, the sole source of energy for the audible sound is energy contained in a magnetic field that acts on the audio reproduction accessory, the magnetic field produced by a transmit coil (134) of the portable electronic device.

7. The audio reproduction accessory as recited in claim 6, comprising:

a housing (206) for the audio reproduction accessory;
a pick-up coil (202), mounted inside the housing, to convert the energy contained in the magnetic field into an alternating current; and
a sound-reproducing electroacoustic transducer (204), mounted inside the housing, to generate the audible sound from the alternating current.

8. The audio reproduction accessory as recited in claim 7, wherein an electrical impedance of the sound-reproducing electroacoustic transducer is in the range of 32 ohms to 800 ohms, and/or wherein the sound-reproducing electroacoustic transducer is a moving-coil speaker or a magnetostrictive speaker.

9. The audio reproduction accessory as recited in any one of claims 6 to 8, wherein an edge (214) of the pick-up coil is mounted no further than 2 millimeters from a portion (216) of an external surface (218) of the housing such that a cylindrical axis (212) of the pick-up coil is substantially parallel to the portion of the external surface of the housing.

10. The audio reproduction accessory as recited in claim 9, wherein the housing comprises mechanical guides (192) for placement and alignment of the portable electronic device near the audio reproduction accessory such that an edge (154) of the transmit coil is no further than 3 millimeters from the edge of the pick-up coil.

11. The audio reproduction accessory as recited in claim 6, comprising:

    a housing (206) for the audio reproduction accessory; and
    a sound-producing element (492) contained in the housing, the sound-producing element comprising:

        a rigid frame (408) affixed to the housing;
        a flexible diaphragm (404) affixed to the rigid frame;
        a permanent magnet (406) affixed to a center of the diaphragm such that an edge (418) of the permanent magnet is no further than 2 millimeters from a portion (416) of an external surface (218) of the housing and a magnetic axis (412) of the permanent magnet passes through the center of the diaphragm and is substantially perpendicular to the portion of the external surface of the housing, wherein the permanent magnet and the flexible diaphragm are capable of vibrating together along the magnetic axis in response to the energy contained in the magnetic field to create vibrations in air pressure inside the housing and hence the audible sound.

12. The audio reproduction accessory as recited in claim 11, wherein the housing comprises mechanical guides (192) for placement and alignment of the portable electronic device near the audio reproduction accessory such that an edge (154) of the transmit coil is no further than 3 millimeters from the edge of the permanent magnet.

13. The audio reproduction accessory as recited in any one of claims 6 to 12, comprising:

    a permanent magnet (222) to enable a Hall effect sensor in the portable electronic device to detect proximity of the audio reproduction accessory to the portable electronic device.

14. A method in a portable electronic device (100,300) having an audio coder-decoder 'CODEC' (116) and a magnetic audio interface (134) coupled to the CODEC, the method comprising:

    while not routing analog audio signals generated by the CODEC to the magnetic interface, automatically determining the presence of conditions for magnetic coupling between the portable electronic device and an audio reproduction accessory (200,400) and consequently, routing analog audio signals generated by the CODEC to the magnetic audio interface.

15. The method as recited in claim 14, further comprising:

    while routing analog audio signals generated by the CODEC to the magnetic audio interface, automatically determining the lack of conditions for magnetic coupling between the portable electronic device and the audio reproduction accessory (200,400) and consequently, ceasing to route the analog audio signals to the magnetic audio interface.

16. The method as recited in claim 14 or claim 15, wherein the magnetic audio interface comprises a transmit coil capable of producing an alternating magnetic field (150) upon passage of analog audio signals through the transmit coil, and wherein automatically determining the presence of conditions for magnetic coupling between the portable electronic device and the audio reproduction accessory comprises:

    detecting that a voltage level across the transmit coil is higher, at least momentarily, than a threshold.

**17.** The method as recited in claim 14 or claim 15, wherein the magnetic audio interface comprises a transmit coil capable of producing an alternating magnetic field (150) upon passage of analog audio signals through the transmit coil, or as recited in claim 16, and wherein the portable electronic device has a microphone (118) coupled to the CODEC and automatically determining the presence of conditions for magnetic coupling between the portable electronic device and the audio reproduction accessory comprises:

> causing the CODEC to generate test analog audio signals that represent a test tone;
> injecting the test analog audio signals to the transmit coil; and
> determining that the microphone detects an audible sound corresponding to the test tone.

# FIG. 1

EP 2 582 153 A1

**100 PORTABLE ELECTRONIC DEVICE**

- 102 PROCESSOR
- 106 USER I/O
- 108 WIRELESS I/F
- 110 WIRED I/F

**104 MEMORY**
- 112 MEDIA FILES
- 114 AUDIO BUFFER
- 130 MEDIA PLAYER
- 132 COM. APP.
- 101 CODE

126

116 CODEC ← 122 ← 118 MIC. ← 120

124 / 128

144 SWITCH / AMP / SHAPE

138 SPEAKER → 140

142 CONNECT.

136 / 134 / 154

146

170

162
- 166 LPF
- 164 THRESHOLD

168

148 / 150 / 158

152

160 PROXIMITY DETECTOR

**200 AUDIO REPRODUCTION ACCESSORY**

214 / 202

220

208

204 ELECTRO-ACOUSTIC TRANSDUCER

156

216

218

210 / 212

206

222 PROXIMITY INDICATOR

FIG. 2

FIG. 3

# FIG. 4

**300 PORTABLE ELECTRONIC DEVICE**

- 102 PROCESSOR
- 106 USER I/O
- 108 WIRELESS I/F
- 110 WIRED I/F
- 104 MEMORY
  - 112 MEDIA FILES
  - 114 AUDIO BUFFER
  - 130 MEDIA PLAYER
  - 132 COM. APP.
  - 101 CODE

- 126
- 116 CODEC
- 122
- 118 MIC.
- 120
- 124
- 128
- 144 SWITCH / AMP / SHAPE
- 140
- 138 SPEAKER
- 142 CONNECT.
- 146  134
- 136  150
- 148  354
- 356
- 416
- 162  170
- 166 LPF
- 164 THRESHOLD
- 168
- 158
- 160 PROXIMITY DETECTION
- 152

**400 AUDIO REPRODUCTION ACCESSORY**

- 220
- 408 FRAME
- 418
- 406 MAGNET
- 410  404 DIAPHRAGM
- 412
- 408 FRAME
- 402 SOUND PRODUCING ELEMENT
- 218
- 222 PROXIMITY INDICATOR
- 206

EP 2 582 153 A1

*500*

START

502

MAGNET VIBRATES IN RESPONSE TO CHANGES IN A MAGNETIC FIELD ORIGINATING FROM OUTSIDE OF ACCESSORY

504

DIAPHRAGM MOVES RELATIVE TO FRAME

506

AIR PRESSURE CHANGES

508

SOUND IS GENERATED

END

# FIG. 5

START

600

602 DETERMINE PORTABLE ELECTRONIC DEVICE HAS BECOME COUPLED TO AUDIO REPRODUCTION ACCESSORY

604 ROUTE SUBSEQUENT AUDIO SIGNALS TO TRANSMIT COIL OF PORTABLE ELECTRONIC DEVICE

606 DETERMINE PORTABLE ELECTRONIC DEVICE HAS BECOME UNCOUPLED TO AUDIO REPRODUCTION ACCESSORY

608 STOP ROUTING AUDIO SIGNALS TO THE TRANSMIT COIL

610 ROUTE SUBSEQUENT AUDIO SIGNALS TO INTERNAL SPEAKER(S) OF PORTABLE ELECTRONIC DEVICE

FIG. 6

602

| 702 | DETECT PROXIMITY OF A PROXIMITY INDICATOR OF AUDIO REPRODUCTION ACCESSORY |

| 704 | DETECT INDUCED CURRENT OR INDUCED VOLTAGE IN A TRANSMIT COIL |

| 706 | INDUCE A TEST AUDIO TONE TO A TRANSMIT COIL AND DETECT WITH A MICROPHONE A CORRESPONDING TONE OF SUFFICIENT SIMILARITY TO THE TEST TONE |

# FIG. 7

606

| 802 | DOES NOT DETECT PROXIMITY OF A PROXIMITY INDICATOR OF AUDIO REPRODUCTION ACCESSORY |

| 804 | DETECT INDUCED CURRENT OR INDUCED VOLTAGE IN A TRANSMIT COIL |

| 806 | INDUCE A TEST AUDIO TONE TO A TRANSMIT COIL AND FAIL TO DETECT WITH A MICROPHONE A CORRESPONDING TONE OF SUFFICIENT SIMILARITY TO THE TEST TONE |

# FIG. 8

FIG. 9

Europäisches
Patentamt

European
Patent Office

Office européen
des brevets

# EUROPEAN SEARCH REPORT

Application Number

EP 11 18 4884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/081473 A1 (CHATTERJEE MANJIRNATH [US] ET AL) 1 April 2010 (2010-04-01) * page 2, paragraph 47 - page 3, paragraph 57 * * page 5, paragraph 87 - page 6, paragraph 105 * * page 9, paragraph 133 - page 16, paragraph 232 * * claims 1-17; figures 1,2A,2B,7A-7C,9A-14,16-18 * ----- | 1-17 | INV. H04R9/02 H04M1/725 |
| A | US 5 812 598 A (SHARMA MADAN M [US] ET AL) 22 September 1998 (1998-09-22) * column 8, line 10 - column 10, line 24 * * column 17, line 1 - column 18, line 66 * * figures 9-10B * ----- | 3,16 | |

TECHNICAL FIELDS
SEARCHED (IPC)

H04R
H04M

The present search report has been drawn up for all claims

| Place of search | Date of completion of the search | Examiner |
|---|---|---|
| Munich | 14 May 2012 | Meiser, Jürgen |

EPO FORM 1503 03.82 (P04C01)

**ANNEX TO THE EUROPEAN SEARCH REPORT
ON EUROPEAN PATENT APPLICATION NO.**

EP 11 18 4884

This annex lists the patent family members relating to the patent documents cited in  the above-mentioned European search report.
The members are as contained in the European Patent Office EDP file on
The European Patent Office is in no way liable for these particulars which are merely given for the purpose of information.

14-05-2012

| Patent document cited in search report | | Publication date | Patent family member(s) | | Publication date |
|---|---|---|---|---|---|
| US 2010081473 | A1 | 01-04-2010 | CN | 102217201 A | 12-10-2011 |
| | | | DE | 112009002333 T5 | 08-03-2012 |
| | | | GB | 2476214 A | 15-06-2011 |
| | | | US | 2010081473 A1 | 01-04-2010 |
| | | | WO | 2010036501 A2 | 01-04-2010 |
| US 5812598 | A | 22-09-1998 | AT | 211333 T | 15-01-2002 |
| | | | AU | 7252394 A | 24-01-1995 |
| | | | DE | 69429516 D1 | 31-01-2002 |
| | | | DE | 69429516 T2 | 08-08-2002 |
| | | | DK | 706732 T3 | 08-04-2002 |
| | | | EP | 0706732 A1 | 17-04-1996 |
| | | | US | 5568516 A | 22-10-1996 |
| | | | US | 5615229 A | 25-03-1997 |
| | | | US | 5812598 A | 22-09-1998 |
| | | | WO | 9501678 A1 | 12-01-1995 |

EPO FORM P0459

For more details about this annex : see Official Journal of the European Patent Office, No. 12/82